(19) Europäisches Patentamt
European Patent Office
Office européen des brevets

(11) **EP 2 660 016 B1**

(12) **FASCICULE DE BREVET EUROPEEN**

(45) Date de publication et mention de la délivrance du brevet:
**16.11.2016 Bulletin 2016/46**

(51) Int Cl.:
***B25J 19/00*** *(2006.01)*

(21) Numéro de dépôt: **13001035.8**

(22) Date de dépôt: **01.03.2013**

(54) **Bras mécanique articulé équipé d'un dispositif passif de compensation de la gravité**

Mechanischer Gelenkarm, der mit einer passiven Vorrichtung zur Kompensierung der Schwerkraft ausgestattet ist

Articulated mechanical arm provided with a passive device for gravity compensation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2012 CH 5932012**

(43) Date de publication de la demande:
**06.11.2013 Bulletin 2013/45**

(73) Titulaire: **Trimos S.A.**
**1020 Renens (CH)**

(72) Inventeurs:
• **Dorigatti, Luca**
**1044 Fey (CH)**
• **Dewarrat, Stéphane**
**1110 Morges (CH)**

(74) Mandataire: **Micheli & Cie SA**
**Rue de Genève 122**
**Case Postale 61**
**1226 Genève-Thônex (CH)**

(56) Documents cités:
**JP-A- H0 890 484     US-A- 6 145 403**

EP 2 660 016 B1

**Description**

La présente invention a pour objet un bras mécanique articulé muni d'un dispositif passif de compensation de la gravité.

Les bras mécanique articulés sont notamment utilisés dans un grand nombre de domaines industriels (grues), dans le domaine médical (robots) et pour la mesure de coordonnées.

Un bras mécanique articulé comprend généralement un membre supérieur articulé par une ou plusieurs articulations à une base (épaule) et auquel est articulé par une ou plusieurs articulations (coude) un avant-bras qui peut servir de support à un porte-outil articulé (poignet) ou non.

La plupart des bras mécaniques articulés industriels présentent une configuration à six degrés de liberté. Il existe également des bras mécaniques articulés anthropomorphiques à sept degrés de liberté ou des bras mécaniques articulés plus limités présentant une configuration à cinq degrés de liberté ou moins. En règle générale, chaque articulation d'un bras mécanique articulé est une liaison pivot permettant une rotation limitée ou illimitée autour d'un axe.

Un bras mécanique articulé est soumis à la gravité et pour éviter la chute du membre supérieur et/ou de l'avant bras, il est nécessaire de prévoir un dispositif permettant de compenser l'action de la gravité sur les articulations du bras. En général, de tels dispositifs sont actifs, c'est-à-dire qu'ils nécessitent un apport en énergie, et comprennent soit des moteurs soit un système de frein actionnés selon la position et l'orientation du bras. Des dispositifs passifs qui ne nécessitent pas de source d'énergie existent et comprennent des ressorts, comme dans le cas des lampes de bureau du type Anglepoise (marque déposée), ou des contrepoids. Les dispositifs actifs, comme les dispositifs motorisés ou les systèmes de frein peuvent être utilisés sur tout type de bras mécanique articulé et en particulier sur des structures lourdes. Cependant, ces dispositifs actifs sont en général encombrants ce qui peut nuire à la maniabilité et à la précision du bras mécanique articulé. De plus, ils nécessitent un apport d'énergie pour fonctionner. Quant aux dispositifs passifs connus, comme les dispositifs à ressorts ou à contrepoids, ils ne sont pas toujours adaptés à des bras mécaniques articulés de grandes tailles destinés à effectuer des tâches lourdes et plus la taille du bras augmente plus ils deviennent encombrants avec les inconvénients cités ci-dessus.

Le document US 6 145 403, qui représente le préambule de la revendication 1, décrit un bras mécanique articulé comprenant un dispositif magnétique destiné à compenser les forces et les moments agissant sur le bras. Ledit dispositif comprend un premier et un second élément magnétique pouvant se déplacer en translation l'un par rapport à l’autre.

Le but de la présente invention est de réaliser un bras mécanique articulé équipé d'un dispositif de compensation de la gravité destiné à compenser les effets de la gravité sur au moins une articulation du bras mécanique articulé qui obvie aux inconvénients précités. En particulier, le but de la présente invention est de réaliser un bras mécanique articulé muni d'un dispositif de compensation de la gravité qui soit passif, sûr - évitant toute chute intempestive du bras mécanique articulé quelque soit sa position ou son orientation - et moins encombrant que les dispositifs connus. Un autre but de la présente invention est de réaliser un bras mécanique articulé muni d'un dispositif de compensation, qui, de par sa construction, permette de rendre ledit bras mécanique articulé plus maniable, plus précis et plus efficace énergétiquement et qui s'adapte à une grande variété de bras mécaniques articulés des plus simples et légers ou plus complexes et lourds quels que soient leurs usages.

La présente invention a pour objet un bras mécanique articulé comprenant un dispositif passif de compensation de la gravité agencé pour compenser les effets de la gravité sur au moins une première liaison pivot articulant un premier membre dudit bras à un second membre dudit bras et constituant un premier degré de liberté dudit bras, ledit dispositif passif de compensation de la gravité comprenant un mécanisme de transmission et au moins un dispositif magnétique, le mécanisme de transmission étant agencé pour transmettre au dispositif magnétique toute rotation du second membre par rapport à ladite première liaison pivot, le dispositif magnétique étant agencé pour produire un couple suite à ladite rotation du second membre, le mécanisme de transmission et le dispositif magnétique étant encore agencés pour que ledit couple soit retransmis par le mécanisme de transmission à la première liaison pivot, de sorte que ledit couple retransmis annule le moment de force dû à la gravité s'exerçant sur le bras mécanique articulé par rapport à ladite première liaison pivot, caractérisé par le fait que ledit au moins un dispositif magnétique comprend au moins un premier rotor pivotant par rapport à un stator ou à un second rotor.

L'invention a donc pour objet un bras mécanique articulé muni d'un dispositif agencé pour compenser les couples dus à la gravité exercés sur au moins une articulation du bras.

Dans une forme d'exécution privilégiée, le dispositif selon l'invention est situé dans le bras supérieur du bras mécanique articulé, de préférence le plus près possible de la ou des liaisons pivots articulant ledit bras supérieur à la base du bras mécanique articulé. Le dispositif est entraîné par des arbres de transmission qui permettent de reproduire aussi fidèlement que possible l'orientation de l'avant-bras par rotation de la ou des liaisons pivots entre le bras supérieur et l'avant bras et de la ou des liaisons pivots entre la base du bras mécanique articulé et le bras supérieur.

Comme il sera décrit en détail plus loin, le dispositif comprend des engrenages et des dispositifs magnétiques constitués d'aimants générant des couples destinés à compenser les effets de la gravité sur une ou plusieurs articulation du bras. Lesdits dispositifs magnétiques tiennent compte de la position et de l'orientation du bras supérieur et de l'avant bras par rapport à une position de repos, se chargent et renvoient des couples mécaniques au système d'articulation du bras mécanique articulé afin de compenser pleinement les couples dus à la gravité.

En particulier, le dispositif selon l'invention est suffisant pour compenser tous les effets de la gravité sur une ou plusieurs articulations du bras mécanique articulé, sans qu'un autre dispositif de compensation passif par contrepoids ou actif à l'aide de moteurs ou de freins ne soit nécessaire. Le bras mécanique articulé peut bien évidemment comprendre un autre dispositif de compensation connu en plus du dispositif de compensation selon l'invention et décrit ci-après.

Les figures annexées illustrent schématiquement et à titre d'exemple uniquement une forme d'exécution d'un bras mécanique articulé équipé d'un dispositif passif de compensation de la gravité selon l'invention.

La figure 1 illustre un bras mécanique articulé équipé d'un dispositif passif de compensation de la gravité selon l'invention.

Les figures 2, 3 et 4 sont des représentations schématiques simplifiées du bras mécanique articulé illustré à la figure 1 mettant en évidence les forces s'exerçant sur ledit bras et les systèmes d'axes des liaisons pivot dudit bras.

La figure 5 illustre schématiquement le mécanisme de transmission des mouvements du bras mécanique articulé de la figure 1 au dispositif passif de compensation selon l'invention.

La figure 6 illustre schématiquement le dispositif de compensation selon une forme d'exécution privilégiée de l'invention.

La figure 7 est une vue détaillée en coupe du dispositif de compensation illustré à la figure 6.

Les figures 8 et 9 sont des vues en coupe selon un axe perpendiculaire à l'axe 152i du dispositif de compensation illustré à la figure 6 illustrant l'agencement des dispositifs magnétiques.

Les figures 10 et 11 sont des vues en coupe selon un axe perpendiculaire à l'axe 152i du dispositif de compensation illustré à la figure 6 illustrant respectivement un engrenage planétaire inverse et un engrenage planétaire simple.

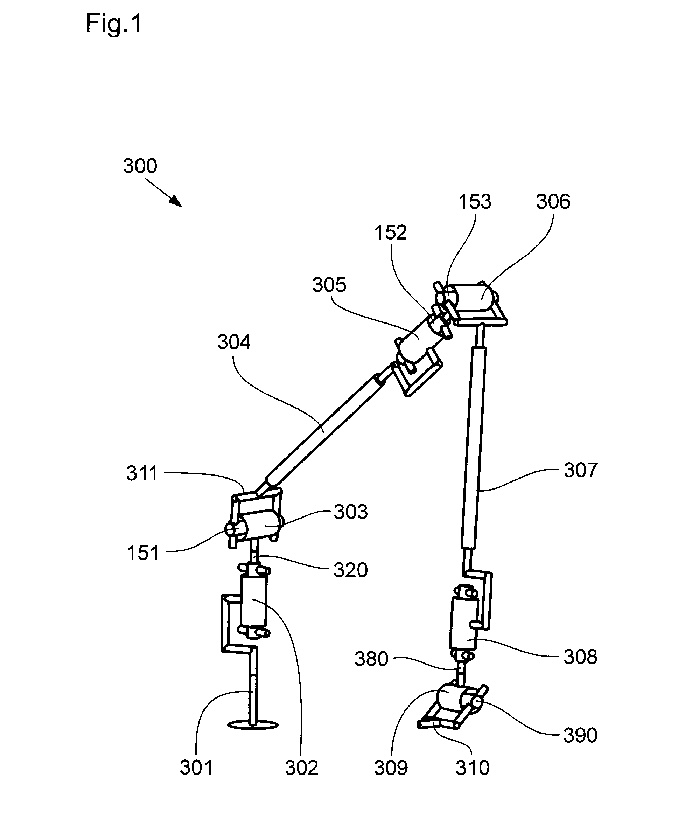

Une forme d'exécution du dispositif passif de compensation de la gravité pour un bras mécanique articulé selon l'invention va maintenant être décrite en détail en référence aux figures. Dans cette forme d'exécution, le dispositif de compensation de la gravité équipe un bras mécanique articulé 300 illustré à la figure 1.

Le bras mécanique articulé 300 est disposé sur une base 301 fixée à un support rigide externe comme par exemple le sol ou le plafond ou toute autre surface appropriée. Un bras supérieur 304 est articulé par une de ses extrémités à la base 301 au moyen d'une première liaison pivot 302 et d'une deuxième liaison pivot 303. La première liaison pivot 302 permet la rotation d'un premier axe (physique) 320 autour de son axe longitudinal. Ledit axe longitudinal définit donc l'axe (imaginaire) de rotation de la première liaison pivot 302 qui sera désigné par premier axe de rotation 320i dans la suite. La deuxième liaison pivot 303 permet la rotation d'un deuxième axe (physique) 151 autour de son axe longitudinal qui définit donc l'axe (imaginaire) de rotation de la deuxième liaison pivot 303 qui sera désigné par deuxième axe de rotation 151i dans la suite. Le deuxième axe 151, et par conséquent le deuxième axe de rotation 151i de la deuxième liaison pivot 303 est essentiellement orthogonal au premier axe 320 (et au premier axe de rotation 320i) de la première liaison pivot 302.

Un avant bras 307 est articulé au bras supérieur 304 au moyen d'une troisième liaison pivot 305 et d'une quatrième liaison pivot 306. La troisième liaison pivot 305 permet la rotation d'un troisième axe (physique) 152 autour de son axe longitudinal qui définit donc l'axe (imaginaire) de rotation de la troisième liaison pivot 305 qui sera désigné par troisième axe de rotation 152i dans la suite. La quatrième liaison pivot 306 permet la rotation d'un quatrième axe (physique) 153 autour de son axe longitudinal qui définit donc l'axe (imaginaire) de rotation de la quatrième liaison pivot 306 qui sera désigné par quatrième axe de rotation 153i dans la suite. De préférence, le troisième axe 152 - et par conséquent le troisième axe de rotation 152i - de la troisième liaison pivot 305 est essentiellement parallèle à l'axe longitudinal du bras supérieur 304. Dans la forme d'exécution illustrée, ledit troisième axe de rotation 152i est confondu avec l'axe longitudinal du bras supérieur 304. Le quatrième axe 153 - et par conséquent le quatrième axe de rotation 153i - de la quatrième liaison pivot 306 est essentiellement orthogonal au troisième axe 152 de la troisième liaison pivot 305. De plus, le deuxième axe 151, et par conséquent le deuxième axe de rotation 151i de la deuxième liaison pivot 303 est essentiellement orthogonal au troisième axe 152 - et par conséquent au troisième axe de rotation 152i.

Un porte-outil 310 peut encore être articulé à l'avant bras 307 au moyen, par exemple, d'une cinquième liaison pivot 308 dont l'axe de rotation 380 est essentiellement confondu avec l'axe longitudinal de l'avant bras 307 et une sixième liaison pivot 309 dont l'axe de rotation 390 est essentiellement orthogonal à l'axe de rotation 380 de la cinquième liaison pivot. Le porte-outil 310 forme la « main » du bras mécanique articulé 300 et est destiné à recevoir un outil comme une pince, un instrument de mesure ou tout autre outil approprié à l'utilisation du bras mécanique articulé 300.

Dans la suite, il est considéré que le premier axe 320 et le premier axe de rotation 320i de la première liaison pivot 302 sont verticaux. Dans la forme d'exécution illustrée à la figure 1, le troisième axe de rotation 152i (confondu avec l'axe longitudinal du bras supérieur 304) et le deuxième axe de rotation 151i de la deuxième liaison pivot 303 ne sont pas concourants, le bras supérieur 304 étant fixé à la deuxième liaison pivot 303 au moyen d'une fourche 311 qui forme un angle fixe avec ledit deuxième axe de rotation 151i de ladite deuxième liaison pivot 303. Il est évident pour l'homme du métier que cet angle peut être ajusté pour des questions d'ergonomie et d'esthétique du bras mécanique articulé 300 et qu'en variante, ledit deuxième axe de rotation 151i de la deuxième liaison pivot 303 et l'axe longitudinal du bras supérieur 304 pourraient être concourants. Ce même raisonnement s'applique au troisième axe de rotation 153i et à l'axe longitudinal de l'avant-bras 307 qui peuvent être concourants ou non.

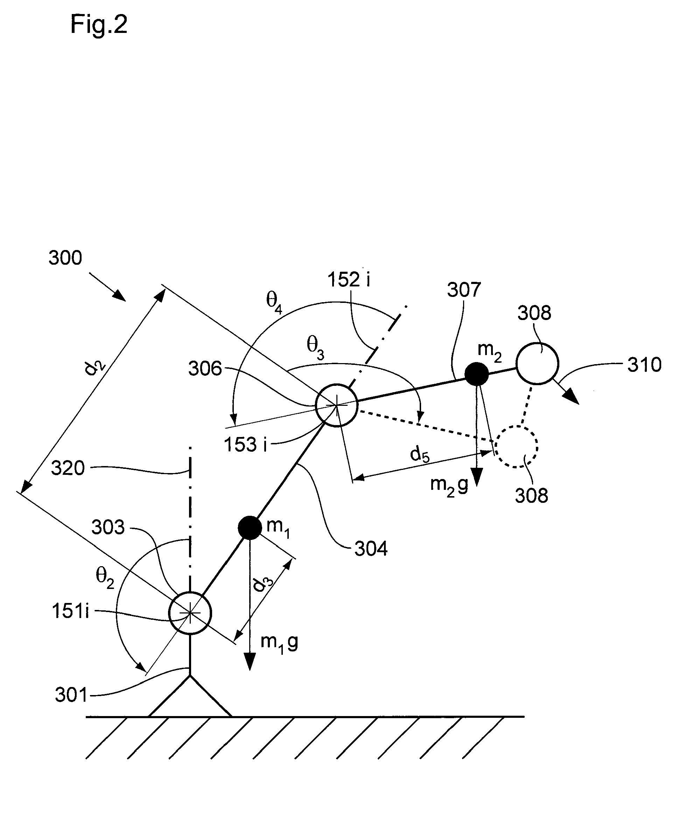

Il apparaîtra clairement dans la suite que le fait que le deuxième axe de rotation 151i de la deuxième liaison pivot 303 et l'axe longitudinal du bras supérieur 304 soient concourants ou non n'a pas d'influence pour la présente invention. En particulier, les figures 2, 3 et 4 illustrent schématiquement un bras mécanique articulé 300 où lesdits axes sont concourants et la discussion théorique qui va suivre sur les forces s'exerçant sur ledit bras est immédiatement applicable au cas où certains des axes de rotation du système ne seraient pas concourants.

Chaque liaison pivot 302, 303, 305, 306, 308, 309 du bras mécanique articulé 300 offre un degré de liberté audit bras qui en compte donc six dans cette forme d'exécution. Les liaisons pivots 302, 303, 305, 306, 308, 309 sont des dispositifs connus de l'homme du métier et ne seront pas décrites plus en détail ici. Elles peuvent notamment être réalisées avec des guidages rotatifs ou roulements permettant la rotation de leur axe respectif dans un logement approprié. De façon connue également, les liaisons pivots sont reliées en série au bras supérieur 304 et à l'avant-bras 307 par des éléments mécaniques rigides appropriés, comme la fourche 311 par exemple.

Le bras mécanique articulé 300 a été décrit ci-dessus à titre d'exemple. En particulier, il apparaîtra clairement dans la suite que la présente invention n'est pas limitée à l'agencement du bras mécanique articulé décrit ci-dessus en référence aux figures.

Le dispositif de compensation de la gravité 150 selon la présente forme d'exécution est agencé pour compenser les couples dus à la gravité s'exerçant sur les deuxième, troisième et quatrième axes 151, 152, 153 des deuxième, troisième et quatrième liaisons pivot 303, 305, 306 respectivement. On détermine donc lesdits couples.

Les figures 2, 3 et 4 illustrent schématiquement le bras mécanique articulé 300 et les liaisons pivot qui le composent ainsi que les systèmes d'axes considérés. Ces représentations schématiques vont permettre de calculer les couples ou moments de force dus à la gravité et s'exerçant sur les deuxième, troisième et quatrième axes 151, 152, 153 des deuxième, troisième et quatrième liaisons pivot 303, 305, 306 respectivement en fonction de la rotation du bras supérieur 304 et de l'avant-bras 307 par rapport auxdites liaisons pivot.

La convention de Denavit-Hartenberg utilisée en robotique a été appliquée pour déterminer le système de référence de chaque liaison pivot.

Dans les figures, un cercle avec un point au milieu indique un vecteur perpendiculaire au plan de la feuille et pointant vers le lecteur tandis qu'un cercle avec une croix au milieu indique un vecteur perpendiculaire au plan de la feuille et s'éloignant du lecteur.

Les vecteurs unitaires définissant un repère orthonormé pour chacune des première, deuxième, troisième, quatrième et cinquième liaisons pivot 302, 303, 305, 306, 308 ont donc été choisis de la façon suivante :

- Les vecteurs $z_n$ sont choisis sur l'axe de rotation de chacune des liaisons pivot, pour n allant de 1 à 5 ;
- Les vecteurs $x_n$ sont parallèles à la normale commune aux vecteurs $x_{n-1}$ et $z_n$, soit $x_n = z_{n-1} \wedge z_n$, pour n allant de 2 à 5 ;
- Les vecteurs $y_n$ sont choisis de sorte que les vecteurs $x_n$, $y_n$ et $z_n$ forment un repère orthonormé direct (règle du tire bouchon ou de la main droite) pour n allant de 1 à 5.

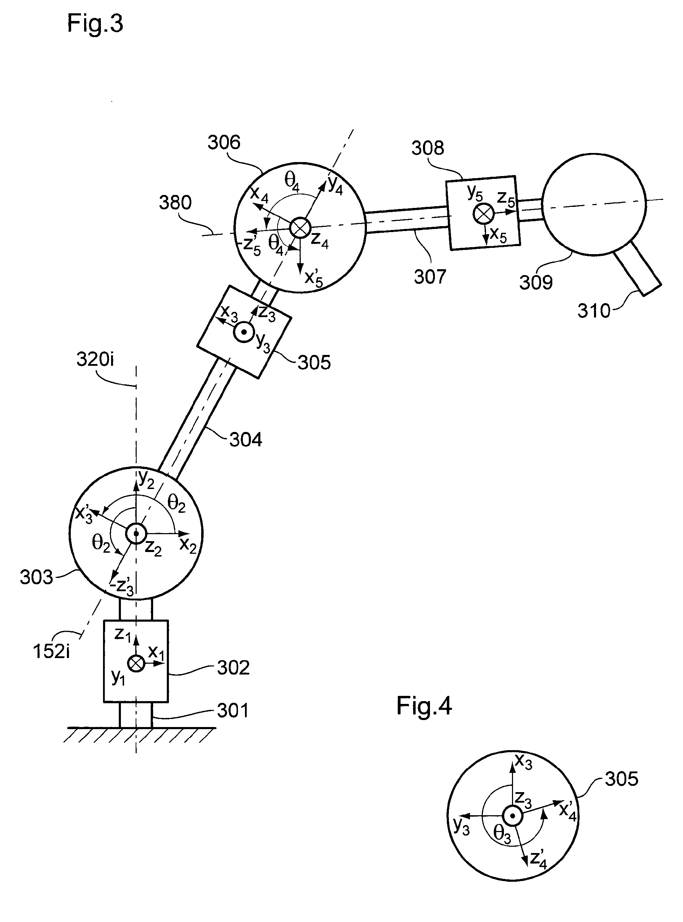

On obtient ainsi comme illustré sur la figure 3 :

- Le vecteur $z_1$ est dirigé selon le premier axe de rotation 320i de la première liaison pivot 302, le vecteur $z_2$ est dirigé selon le deuxième axe de rotation 151i de la deuxième liaison pivot 303, le vecteur $z_3$ est dirigé selon le troisième axe de rotation 152i (confondu ici avec l'axe longitudinal du bras supérieur 304) de la troisième liaison pivot 305, le vecteur $z_4$ est dirigé selon le quatrième axe de rotation 153i de la quatrième liaison pivot 306 et le vecteur $z_5$ est dirigé selon l'axe de rotation de la cinquième liaison pivot 308 qui est ici confondu avec l'axe longitudinal de l'avant-bras 307.
- Les couples de vecteurs suivants désignent des vecteurs essentiellement orthogonaux entre eux : $z_1$ et $z_2$, $z_2$ et $z_3$, $z_3$ et $z_4$, $z_4$ et $z_5$.
- Les couples de vecteurs suivant désignent des vecteurs essentiellement parallèles entre eux : $y_1$ et $z_2$, $y_2$ et $z_3$, $y_3$ et $z_4$, $y_4$ et $z_5$.

Toujours suivant la convention de Denavit-Hartenberg, on désigne par $\theta_n$ l'angle orienté autour du vecteur $z_n$ entre les vecteurs $x_n$ et $x_{n+1}$. On désigne par $x'_n$ ou $y'_n$ ou $z'_n$ les vecteurs transposés à $x_n$, $y_n$ ou $z_n$ respectivement. On utilise le signe - pour désigner le vecteur opposé.

En particulier, on considère les angles suivants :

- L'angle $\theta_2$ désigne l'angle orienté dans le sens positif autour du vecteur $z_2$ entre le vecteur $x_2$ et le vecteur transposé $x_3$'. Cet angle $\theta_2$ est égal à l'angle orienté dans le sens positif autour du vecteur $z_2$ entre le vecteur $y_2$ et le vecteur transposé opposé à $z_3$, noté $-z_3$'. Il s'agit donc de l'angle orienté entre le premier axe de rotation 320i de la première liaison pivot 302 (qu'on a supposé vertical) et le troisième axe de rotation 152i confondu ici avec l'axe longitudinal du bras supérieur 304. Cet angle $\theta_2$ détermine donc la rotation du bras supérieur 304 par rapport à la deuxième liaison pivot 303.
- L'angle $\theta_3$ désigne l'angle orienté dans le sens positif autour du vecteur $z_3$ entre le vecteur $x_3$ et le vecteur transposé $x_4$'. Cet angle $\theta_3$ détermine donc la rotation de l'avant-bras 307 par rapport à la troisième liaison pivot 305 (voir la figure 4 pour une illustration de cet angle dans un plan perpendiculaire au vecteur $z_3$ et contenant les vecteurs $z_4$ et $x_4$).
- L'angle $\theta_4$ désigne l'angle orienté dans le sens positif autour du vecteur $z_4$ entre le vecteur $x_4$ et le vecteur transposé $x_5$'. Cet angle $\theta_4$ est égal à l'angle orienté dans le sens positif autour de $z_4$ entre le vecteur $y_4$ et le vecteur transposé opposé au vecteur $z_5$, noté $-z_5$'. Il s'agit donc de l'angle orienté entre le troisième axe de rotation 152i de la troisième liaison pivot 305 et l'axe longitudinal de l'avant-bras 307 considéré dans le plan uniquement déterminé perpendiculaire au quatrième axe de rotation 153i de la quatrième liaison pivot 306 et contenant le troisième axe de rotation 152i de la troisième liaison pivot 305 et l'axe longitudinal de l'avant bras 307 (confondu avec l'axe de rotation 380 de la cinquième liaison pivot 308). Cet angle $\theta_4$ détermine donc la rotation de l'avant-bras 307 par rapport à la quatrième liaison pivot 306.

La figure 2 illustre schématiquement le bras mécanique articulé 300 et les forces s'exerçant sur le bras supérieur 304 et l'avant-bras 307.

Une première masselotte $m_1$ représente la masse totale du bras supérieur 304 et des troisième et quatrième liaisons pivot 305 et 306 tandis qu'une seconde masselotte $m_2$ représente la masse totale de l'avant-bras 307, des cinquième et sixième liaisons pivot 308, 309 ainsi que du porte-outil 310.

On considère les distances suivantes :

- La distance $d_2$ est la distance selon le troisième axe de rotation 152i (ou encore selon le vecteur $z_3$) entre le deuxième axe de rotation 151i de la deuxième liaison pivot 303 et le quatrième axe de rotation 153i de la quatrième liaison pivot 306.
- La distance $d_3$ est la distance selon le troisième axe de rotation 152i (ou encore selon le vecteur $z_3$) entre le deuxième axe de rotation 151i de la deuxième liaison pivot 303 et la première masselotte $m_1$ La première masselotte $m_1$ comprenant en plus du bras supérieur 304 la masse des troisième et quatrième liaisons pivot 305, 306 sa position peut être décalée par rapport au centre de gravité du bras supérieur 304.
- La distance $d_5$ est la distance selon l'axe longitudinal de l'avant-bras 307 (ou encore selon le vecteur $z_5$) entre le quatrième axe de rotation 153i de la quatrième liaison pivot 306 et la masselotte $m_2$. Là encore, dans cette forme d'exécution, la seconde masselotte $m_2$ comprenant les masses de l'avant-bras 307, des cinquième et sixième liaisons pivot 308, 309 et du porte-outil 310, sa position peut être décalée par rapport au centre de gravité de l'avant-bras 307.

Dans la forme d'exécution illustrée, pour simplifier les calculs, les cinquième et sixième (et éventuellement, en variante, septième) liaisons pivot 308 et 309 sont agencées pour que leurs rotations ne modifient pas essentiellement l'emplacement du centre de gravité de la masselotte $m_2$ par rapport à l'avant-bras 307 et à la quatrième liaison pivot 306. Pour ce faire, le centre de gravité du porte-outil 310 et des cinquième et sixième liaisons pivot 308 et 309 se trouve le plus proche possible de l'axe 380 de la cinquième liaison pivot 308. Ainsi, dans cette forme d'exécution, les moments de force exercés par les masselottes $m_1$ et $m_2$ sur les deuxième, troisième et quatrième liaisons pivot 303, 305, 306 ne dépendent pas desdites rotations du bras mécanique articulé par rapport au cinquième et sixième (et éventuellement septième) liaisons pivot 308, 309 et les calculs s'en trouvent simplifiés.

A l'aide de ces variables et de l'hypothèse ci-dessus concernant les quatrième et cinquième liaisons pivot 308, 309, il est possible de déterminer le moment de force dû à la gravité exercé par les première et seconde masselottes $m_1$, $m_2$ sur le deuxième axe 151 de la deuxième liaison pivot 303, et en particulier la composante de ce moment par rapport au vecteur $z_2$ :

$$M_{(303,z_2)}(\theta_2,\theta_3,\theta_4) = -g(m_2 d_5(\cos\theta_2 \cos\theta_3 \sin\theta_4 + \sin\theta_2 \cos\theta_4) + (m_1 d_3 + m_2 d_2)\sin\theta_2).$$

Par simplification trigonométrique du membre multiplicateur de $gm_2d_5$, on obtient :

$$M_{(303,z_2)}(\theta_2,\theta_3,\theta_4) = gm_2d_5\Big[\ \sin(\theta_4+\theta_3+\theta_2)+\sin(\theta_4+\theta_3-\theta_2)+\sin(\theta_4-\theta_3+\theta_2)+$$
$$\sin(\theta_4-\theta_3-\theta_2)+2\sin(\theta_4+\theta_2)-2\sin(\theta_4-\theta_2)\ \Big]/4+g(m_1d_3+m_2d_2)\sin\theta_2$$

Cette équation du moment $M_{(303,z2)}$ ci-dessus détermine les couples exercés par la gravité due au bras supérieur 304 sur l'articulation 303.

On détermine également le moment de force dû à la gravité exercé par la seconde masselotte $m_2$ sur le troisième axe 152 de la troisième liaison pivot 305, et en particulier la composante de ce moment par rapport au vecteur $z_3$ :

$$M_{(305,z_3)}(\theta_2,\theta_3,\theta_4) = gm_2d_5(\sin\theta_2\ \sin\theta_3\ \sin\theta_4)$$

Par simplification trigonométrique du membre multiplicateur de $gm_2d_5$, on obtient :

$$M_{(305,z_3)}(\theta_2,\theta_3,\theta_4) = -gm_2d_5\Big[\ \sin(\theta_4+\theta_3+\theta_2)-\sin(\theta_4+\theta_3-\theta_2)$$
$$-\sin(\theta_4-\theta_3+\theta_2)+\sin(\theta_4-\theta_3-\theta_2)\ \Big]/4$$

On détermine enfin le moment de force exercé dû à la gravité par la seconde masselotte m2 sur le quatrième axe 153 de la quatrième liaison pivot 306, en particulier la composante de ce moment par rapport au vecteur $z_4$ :

$$M_{(306,z_4)}(\theta_2,\theta_3,\theta_4) = -gm_2d_5(\cos\theta_2\ \sin\theta_4+\sin\theta_2\ \cos\theta_3\ \cos\theta_4)$$

En simplifiant le membre multiplicateur de $gm_2d_5$, on obtient :

$$M_{(306,z_4)}(\theta_2,\theta_3,\theta_4) = -gm_2d_5\Big[\ \sin(\theta_4+\theta_3+\theta_2)-\sin(\theta_4+\theta_3-\theta_2)+\sin(\theta_4-\theta_3+\theta_2)-$$
$$\sin(\theta_4-\theta_3-\theta_2)+2\sin(\theta_4+\theta_2)+2\sin(\theta_4-\theta_2)\ \Big]/4$$

Le dispositif de compensation de la gravité 150 selon la présente forme d'exécution est agencé pour exercer sur chacun des deuxième, troisième et quatrième axes 151, 152, 153 des deuxième, troisième et quatrième liaisons pivot 303, 305, 306 un contre couple destiné à annuler le moment de force dû à la gravité s'exerçant sur chacun desdits axes tel que calculé ci-dessus et ce quelle que soit la rotation du bras supérieur 304 et/ou de l'avant bras 307 par rapport auxdites liaisons pivot (c'est-à-dire quelles que soient les valeurs des angles $\theta_2$, $\theta_3$, $\theta_4$, les rotations du bras mécanique articulé 300 autour des cinquième et sixième liaisons pivot 308, 309 n'étant pas prise en compte dans cette forme d'exécution). Ainsi, grâce à ces contre couples générés par le dispositif de compensation 150 selon l'invention, pour chacun des deuxième, troisième et quatrième axes 151, 152, 153 des deuxième, troisième et quatrième liaisons pivot 303, 305, 306, la somme des moments de force s'exerçant sur ledit axe est nulle. L'équilibre est maintenu pour chacune des deuxième, troisième et quatrième liaisons pivot 303, 305, 306 et toute chute de l'avant-bras 307 ou du bras supérieur 304 par rapport à ces liaisons due à la gravité est évitée.

Selon la présente forme d'exécution, le dispositif selon l'invention est donc agencé pour exercer sur le deuxième axe 151 le contre couple suivant pour compenser les effets de la gravité sur cet axe :

$$C_{303} = \Big[\ gm_2d_5\sin(\theta_4+\theta_3+\theta_2)+gm_2d_5\sin(\theta_4+\theta_3-\theta_2)+gm_2d_5\sin(\theta_4-\theta_3+\theta_2)+$$
$$gm_2d_5\sin(\theta_4-\theta_3-\theta_2)+2gm_2d_5\sin(\theta_4+\theta_2)-2gm_2d_5\sin(\theta_4-\theta_2)\ \Big]/4 \qquad ,$$

ce contre couple étant déterminé grâce au moment $M_{(303,z2)}$ calculé ci-dessus.

Il faut remarquer que le membre $(m_1d_3+d_2m_2)\sin\theta_2$ dans l'équation du moment $M_{(303,z2)}$ ci-dessus caractérise les effets de la gravité s'exerçant sur le deuxième axe 151 qui sont dus essentiellement au bras supérieur 304. Ces effets ne sont pas compensés par le dispositif selon cette forme d'exécution (d'où le contre couple $C_{303}$ obtenu ci-dessus) mais peuvent l'être par tout autre dispositif approprié et en particulier par un dispositif selon l'invention adapté.

De même, le dispositif de compensation 150 est agencé pour exercer sur le troisième et le quatrième axe 152, 153 les contre couples suivants pour compenser les effets de la gravité sur ces dits axes :

$$C_{305} = \left[\ gm_2 d_5 \sin(\theta_4 + \theta_3 + \theta_2) - gm_2 d_5 \sin(\theta_4 + \theta_3 - \theta_2) - gm_2 d_5 \sin(\theta_4 - \theta_3 + \theta_2) + gm_2 d_5 \sin(\theta_4 - \theta_3 - \theta_2)\ \right]/4$$

et

$$C_{306} = \left[\ gm_2 d_5 \sin(\theta_4 + \theta_3 + \theta_2) - gm_2 d_5 \sin(\theta_4 + \theta_3 - \theta_2) + gm_2 d_5 \sin(\theta_4 - \theta_3 + \theta_2) - gm_2 d_5 \sin(\theta_4 - \theta_3 - \theta_2) + 2gm_2 d_5 \sin(\theta_4 + \theta_2) + 2gm_2 d_5 \sin(\theta_4 - \theta_2)\ \right]/4$$

respectivement, déterminés grâce aux moments de force $M_{(305,z3)}$, $M_{(306,z4)}$ calculés ci-dessus.

Pour ce faire, le dispositif de compensation selon la présente forme d'exécution comprend notamment six dispositifs magnétiques actionnés par les mouvements du bras supérieur 304 et de l'avant-bras 307 autour des deuxième, troisième et quatrième axes 151, 152, 153 et capables chacun de générer un couple précis ainsi qu'un système de transmission permettant d'additionner ces couples pour obtenir les contre couples $C_{303}$, $C_{305}$ et $C_{306}$ calculés ci-dessus et les transmettre à chacun des deuxième, troisième et quatrième axes 151, 152, 153. Le nombre minimal de dispositifs magnétiques nécessaires pour générer les contre couples $C_{303}$, $C_{305}$, $C_{306}$ calculés ci-dessus correspond au nombre de termes en sinus différents composant lesdits contre-couples et qui est égal à six dans cette forme d'exécution, chacun desdits dispositifs magnétiques étant agencés pour générer un couple correspondant à un desdits termes en sinus.

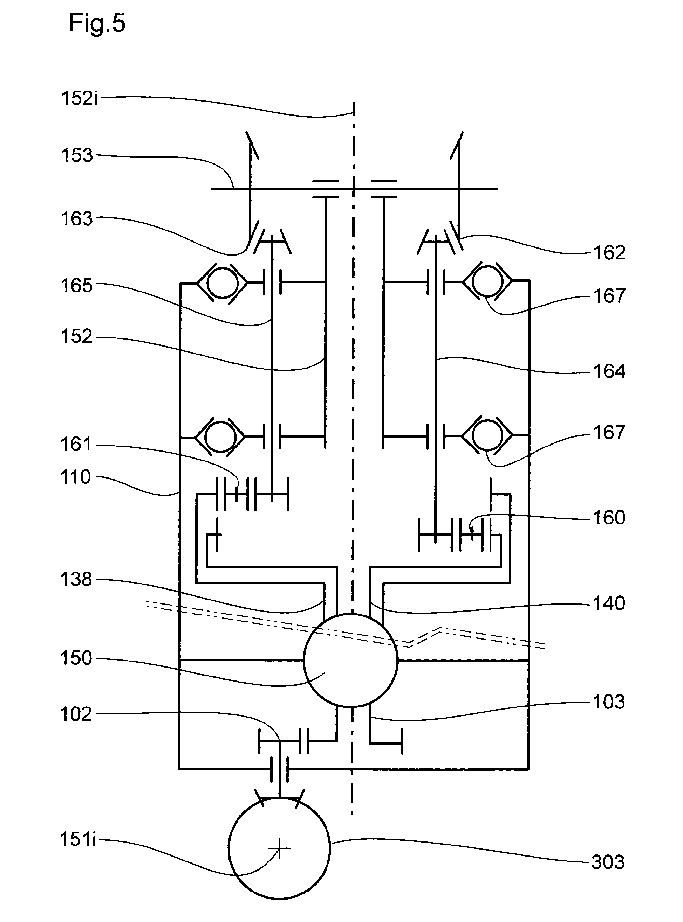

Le dispositif de compensation de la gravité 150 selon la forme d'exécution illustrée va maintenant être décrit en détail en référence aux figures 5 à 11.

Le dispositif de compensation de la gravité 150 selon la forme d'exécution illustrée est disposé dans le bras supérieur 304, de préférence le plus en amont possible, c'est-à-dire le plus proche possible de la deuxième liaison pivot 303 afin de réduire au mieux les couples engendrés par la gravité en diminuant la distance $d_3$. Le dispositif de compensation 150 selon la présente forme d'exécution tient compte des rotations effectuées par la deuxième liaison pivot 303 située en amont du dispositif et par les troisième et quatrième liaisons pivot 305 et 306 situées en aval du dispositif, c'est-à-dire que le dispositif prend comme paramètres les angles $\theta_2$, $\theta_3$ et $\theta_4$.

Le dispositif de compensation 150 est logé dans un support 110 faisant partie du bras supérieur 304. Le support 110 peut être fixé par tout moyen approprié au bras supérieur 304. Dans la forme d'exécution illustrée, le support 110 est un cylindre. Alternativement, le support 110 peut avoir toute forme appropriée.

Les mouvements du bras mécanique articulé 300 par rapport aux deuxième, troisième et quatrième axes 151, 152 et 153 des deuxième, troisième et quatrième liaisons pivot 303, 305, 306 respectivement sont transmis au dispositif de compensation 150 selon l'invention au moyen d'un dispositif de transmission décrit ci-après en référence à la figure 5 notamment.

La troisième liaison pivot 305 est configurée pour permettre la rotation du troisième axe 152 par rapport au support 110 du dispositif de compensation 150. Pour ce faire, la troisième liaison pivot 305 peut par exemple comprendre des guidages rotatifs 167 illustrés à la figure 5, disposés dans le bras supérieur 304 et permettant de faire pivoter le troisième axe 152 de ladite troisième liaison pivot 305 par rapport au bras supérieur 304 et par rapport au support 110 du dispositif de compensation 150. De plus, les troisième et quatrième liaisons pivot 305, 306 sont disposées en série de sorte que, comme illustré aux figures 1 à 3, le troisième axe 152 de la troisième liaison pivot 305 est fixé par une de ses extrémités au quatrième axe 153 de la quatrième liaison pivot 306 essentiellement perpendiculairement audit quatrième axe 153.

Les mouvements du bras mécanique articulé 300 autour du deuxième axe 151 de la deuxième liaison pivot 303 (mouvements caractérisés par l'angle orienté $\theta_2$) sont transmis par un premier engrenage de transmission 102 à un premier arbre de transmission 103 qui entraîne lui-même le dispositif passif de compensation 150. Il est évident que tout type d'éléments de transmission approprié peut constituer le premier engrenage de transmission 102 qui ne sera pas décrit plus en détail ici. En particulier, le premier engrenage de transmission 102 peut être placé à tout endroit adéquat du premier arbre de transmission 103. Si nécessaire, le premier engrenage de transmission 102 peut être dédoublé ou multiplié selon la longueur du premier arbre de transmission 103 et l'endroit où cet arbre 103 peut aisément être entraîné. Dans la forme d'exécution illustrée, le rapport multiplicateur entre la deuxième liaison pivot 303 et le premier arbre de transmission est de un. Il est évident qu'en variante ledit rapport multiplicateur pourrait être un entier différent de un.

Les mouvements de l'avant-bras 307 autour des troisième et quatrième axes 152 et 153 des troisième et quatrième liaisons pivots 305, 306 - caractérisés respectivement par les angles orientés $\theta_3$ et $\theta_4$ - sont transmis au dispositif passif de compensation 150 au moyen de deux mécanismes de transmission distincts dont l'un représente l'addition des mouvements de l'avant bras 307 autour du troisième axe 152 et des mouvements de l'avant bras 307 autour du quatrième axe 153 tandis que l'autre représente la soustraction desdits mouvements.

Le mouvement autour du troisième axe 152 de la troisième liaison pivot 305 soustrait du mouvement autour du quatrième axe 153 de la quatrième liaison pivot 306 est transmis à un quatrième arbre de transmission 164 par une première roue de transmission 162 en prise avec le quatrième axe 153. Le quatrième arbre de transmission 164 entraîne un deuxième engrenage de transmission 160 en prise avec un deuxième arbre de transmission 140 entraînant lui-même le dispositif passif de compensation 150. Le deuxième engrenage de transmission 160 est optionnel. Dans la forme d'exécution illustrée, ce deuxième engrenage de transmission 160 permet de résoudre les problèmes d'entre-axe entres les premier et quatrième arbre de transmission 130, 164.

Le mouvement additionné des troisième et quatrième axes 152, 153 des troisième et quatrième liaisons pivot 305, 306 est transmis quant à lui à un cinquième arbre de transmission 165 par une deuxième roue de transmission 163 en prise avec le quatrième axe 153. Le cinquième arbre de transmission 165 entraîne un troisième engrenage de transmission 161 en prise avec un troisième arbre de transmission 138 entraînant également le dispositif passif de compensation 150. Le troisième engrenage de transmission 161 est similaire au deuxième engrenage de transmission 160 et n'est nécessaire que si le deuxième engrenage de transmission 160 est présent.

La première et la seconde roue de transmission 162, 163 sont en prise avec le quatrième axe 153 via par exemple des engrenages coniques dont la position détermine si les mouvements sont additionnés ou soustraits.

Le dispositif de transmission (102, 103, 160, 161, 162, 163, 164, 165, 140, 138) transmettant les mouvements du bras mécanique articulé 300 autour des deuxième, troisième et quatrième axes 151, 152, 153 des deuxième, troisième et quatrième liaisons pivot 303, 305, 306 respectivement a été décrit ci-dessus à titre d'exemple uniquement. Tout autre moyen de transmission mécanique qui assure une rigidité suffisante pour l'application nécessaire pourrait être utilisé, comme par exemple un dispositif de transmission à câbles ou à courroies.

Ainsi les premier, deuxième et troisième arbres de transmission 103, 140 et 138 entraînent le dispositif de compensation de la gravité 150 selon l'invention :

- Le premier arbre de transmission 103 transmet au dispositif de compensation 150 tout mouvement du bras mécanique articulé autour de la deuxième liaison pivot 303, et donc la valeur de l'angle $\theta_2$ qui caractérise lesdits mouvements ;
- Le deuxième arbre de transmission 140 transmet au dispositif de compensation 150 la soustraction de tout mouvement de l'avant bras 307 autour des troisièmes et quatrième liaisons pivot 305, 306, ce qui correspond à la soustraction des angles $\theta_3$ et $\theta_4$ ;
- Le troisième arbre de transmission 138 transmet au dispositif 150 l'addition de tout mouvement de l'avant bras 307 autour des troisièmes et quatrième liaisons pivot 305, 306, ce qui correspond à l'addition des angles $\theta_3$ et $\theta_4$.

Dans cette forme d'exécution, le dispositif passif de compensation de la gravité 150 prend donc en entrée les trois paramètres suivants :

$$\theta_2, \ \theta_3 - \theta_4, \ \theta_3 + \theta_4,$$

transmis respectivement par le premier, le deuxième et le troisième arbres de transmission 103, 140, 138.

De préférence, les premier, deuxième et troisième arbres de transmission 103, 140 et 138 et le bras supérieur 304 sont coaxiaux et leur axe de rotation est confondu avec le troisième axe de rotation 152i et donc avec l'axe longitudinal du bras supérieur 304. Le troisième axe de rotation 152i est l'axe principal de rotation du dispositif de compensation 150 selon la présente forme d'exécution.

Il est évident pour l'homme du métier qu'en variante, les premier, deuxième et troisième arbres de transmission 103, 140 et 138 pourraient ne pas être coaxiaux et leur axe de rotation pourrait ne pas être confondu le troisième axe de rotation 152i avec mais décalé tout en restant essentiellement parallèle audit troisième axe.

Dans la forme d'exécution illustrée, le premier arbre de transmission 103 est par exemple supporté dans le support 110 du dispositif 150 par des guidages rotatifs 168. Le deuxième arbre de transmission 140 est monté pivotant dans le troisième arbre de transmission 138 qui est quant à lui pivoté dans le premier arbre de transmission 103. Le premier arbre de transmission 103 est donc creux dans cette forme d'exécution. Le deuxième arbre de transmission 140 peut être quant à lui creux ou plein dans cette forme d'exécution. Le premier arbre de transmission 103 peut être réalisé en plusieurs pièces mécaniques solidaires les unes aux autres de sorte que la rigidité de l'ensemble soit suffisante.

Dans la forme d'exécution illustrée, les premier, deuxième et troisième arbres de transmission, et le support 110 sont concentriques. L'agencement des guidages rotatifs ou roulements nécessaires à supporter lesdits arbres les uns ou autres et dans le support 110 n'est pas décrit ici mais apparaîtra immédiatement à l'homme du métier.

Le dispositif de compensation 150 selon la présente forme d'exécution comprend également six dispositifs magnétiques 1 à 6.

Le premier dispositif magnétique 1 est constitué d'un stator extérieur 106 solidairement fixé par tout moyen approprié au support 110 et entourant un rotor intérieur 105, ledit rotor intérieur étant libre en rotation par rapport audit stator extérieur.

Le deuxième dispositif magnétique 2 est constitué d'un rotor extérieur 111 fixé solidairement au premier arbre de transmission 103 et entourant un rotor intérieur 112 fixé solidairement au deuxième arbre de transmission 140, lesdits rotors intérieur et extérieur 112, 111 étant libres en rotation l'un par rapport à l'autre.

Le troisième dispositif magnétique 3 est constitué d'un stator extérieur 113 solidairement fixé par tout moyen approprié au support 110 et entourant un rotor intérieur 114, ledit rotor étant libre en rotation par rapport audit stator.

Le quatrième dispositif magnétique 4 est constitué d'un rotor extérieur 115 fixé solidairement au premier arbre de transmission 103 et entourant un rotor intérieur 116, lesdits rotors intérieur et extérieur 116, 115 étant libres en rotation l'un par rapport à l'autre.

Le cinquième dispositif magnétique 5 est constitué d'un rotor extérieur 117 fixé solidairement au premier arbre de transmission 103 et entourant un rotor intérieur 118 fixé solidairement au troisième arbre de transmission 138, lesdits rotors intérieur et extérieur 118, 117 étant libres en rotation l'un par rapport à l'autre.

Le sixième dispositif magnétique 6 est constitué d'un stator extérieur 119 solidairement fixé par tout moyen approprié au support 110 et entourant un rotor intérieur 120, ledit rotor étant libre en rotation par rapport audit stator.

Dans la forme d'exécution illustrée, les six dispositifs magnétiques 1 à 6 sont coaxiaux aux premier, deuxième et troisième arbres de transmission 103, 140, 138 et par conséquent au troisième axe de rotation 152i.

Chaque dispositif magnétique 1 à 6 est agencé pour que, suite à la rotation du rotor intérieur par rapport au rotor ou stator extérieur d'un certain angle $t_i\,\alpha$ où $t_i$ est un coefficient rationnel non nul pour i = 1 à 6, le retour du rotor intérieur dans sa position de repos par rapport au rotor ou stator extérieur engendre un couple dont la fonction est une sinusoïde régulière de la forme

$$G_i \sin(\alpha)$$

où est $G_i$ est un coefficient réel non nul qui dépend de la taille et des propriétés physiques du dispositif magnétique, pour i = 1 à 6.

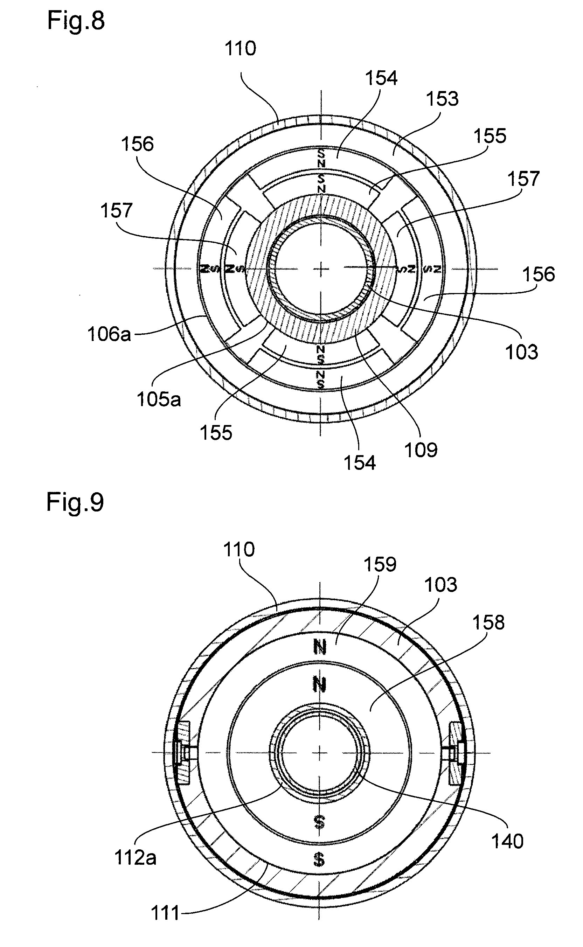

L'agencement des dispositifs magnétiques 1 à 6 selon la présente forme d'exécution est décrit en détail ci-après en référence aux figures 8 et 9. Il apparaîtra clairement à la lecture de cette description détaillée que d'autres agencements appropriés sont possibles.

La figure 8 illustre en détail le premier dispositif magnétique 1 vu en coupe selon un plan perpendiculaire à l'axe de rotation 152i. L'agencement des troisième et sixième dispositifs magnétiques 3 et 6 est similaire à celui du premier dispositif magnétique 1 et ne sera donc pas décrit en détail ici.

Dans la forme d'exécution illustrée, le rotor intérieur 105 du premier dispositif magnétique 1 est constitué d'une enveloppe tubulaire intérieure 105a à laquelle est fixé un premier élément magnétique. Dans la forme d'exécution illustrée, ledit premier élément magnétique est formé d'une première et d'une seconde paires de plaquettes 155, 157 fixées par tout moyen approprié sur la surface extérieure de l'enveloppe tubulaire intérieure 105a.

Les première et seconde paires de plaquettes 155, 157 sont des aimants permanents réalisés dans un matériau approprié. Les deux plaquettes de la première paire de plaquettes 155 sont disposées de sorte à être diamétralement opposées l'une de l'autre, tout comme les deux plaquettes de la seconde paire de plaquettes 157. De préférence, et comme illustré à la figure 8, les plaquettes 155, 157 sont placées en alternance sur l'enveloppe tubulaire intérieure 105a et à un intervalle de 90° les unes des autres. De plus, les plaquettes de la première paire de plaquettes 155 sont orientées de sorte que leur pôle nord N est situé contre l'enveloppe tubulaire intérieure 105a, tandis que les plaquettes de la seconde paire de plaquettes 157 sont orientées de façon opposée, leur pôle sud S étant situé contre l'enveloppe tubulaire intérieure 105a.

De même, le stator extérieur 106 du premier dispositif magnétique 1 est constitué d'une enveloppe tubulaire extérieure 106a à laquelle est fixé par tout moyen approprié un second élément magnétique. Dans la forme d'exécution illustrée, ledit second élément magnétique est formé d'une troisième et d'une quatrième paire de plaquettes 154, 156, fixées sur la surface intérieure de l'enveloppe tubulaire extérieure 106a par tout moyen approprié.

L'agencement des troisième et quatrième paires de plaquettes 154, 156 sur l'enveloppe tubulaire extérieure 106a reflète l'agencement des première et seconde paires de plaquettes 155, 157 sur l'enveloppe tubulaire intérieure 105a du rotor intérieur 105 du premier dispositif magnétique 1.

Les troisième et quatrième paires de plaquettes 154, 156 sont des aimants permanents réalisés dans un matériau approprié. Les troisième et quatrième paires de plaquettes 154, 156 sont agencées pour coopérer avec les première et seconde paires de plaquettes 155, 157 respectivement. Notamment, les champs magnétiques engendrés par les première et troisième paires de plaquettes 155, 154 sont dirigés dans le même sens, qui est opposé au sens des champs magnétiques engendrés par les seconde et quatrième paires de plaquettes 157, 156.

De part l'agencement des paires de plaquettes 154, 155, 156, 157 du rotor intérieur 105 et du stator extérieur 106, à partir de sa position de repos illustrée à la figure 8 le premier dispositif magnétique 1 retrouve une position stable de repos à chaque rotation de 180° du rotor intérieur 105. De plus, le couple maximal est généré après une rotation de 45° du rotor intérieur 105 par rapport à ladite position de repos du dispositif. A 90° le couple est nul et le rotor intérieur 105 est alors dans un équilibre instable. Le même constatation s'applique pour les troisième et sixième dispositifs magnétiques 3, 6 dont l'agencement est en tout point similaire à celui du premier dispositif magnétique 1.

Le rotor intérieur 105 et le stator extérieur 106 et en particulier les paires de plaquettes 154, 155, 156, 157 sont dimensionnés de sorte que:

- Le couple généré par le retour du rotor intérieur 105 dans une position de repos suit une fonction sinusoïdale régulière. La régularité de la fonction est obtenue en variant la dimension des plaquettes 154, 155, 156, 157 et notamment leur diamètre intérieur et/ou extérieur ou leur angle de secteur. Ladite régularité de la fonction dépend également du matériau dans lequel sont réalisés les rotors (matériau magnétique doux par exemple).

- Pour une rotation d'angle $\alpha$ du rotor intérieur 105, la fonction sinusoïdale régulière est de la forme $G_1\sin(\alpha)$ avec dans cette forme d'exécution $G_1$ proportionnel à $1/4gm_2d_5$. En particulier, dans cette forme d'exécution la fonction sinusoïdale régulière a une période double, c'est-à-dire qu'un tour complet du rotor intérieur 105 correspond à deux périodes complètes de la fonction sinusoïdale. C'est l'agencement des plaquettes magnétiques par paires qui rend cela possible. L'utilité dans cette forme d'exécution d'avoir une fonction sinusoïdale de période double deviendra apparente dans la suite.

Cela s'applique également au sixième dispositif magnétique 6 qui est agencé pour générer un couple dont la fonction sinusoïdale régulière est

$$G_6\sin(\alpha)$$

avec dans cette forme d'exécution $G_6$ proportionnel à $1/4gm_2d_5$.

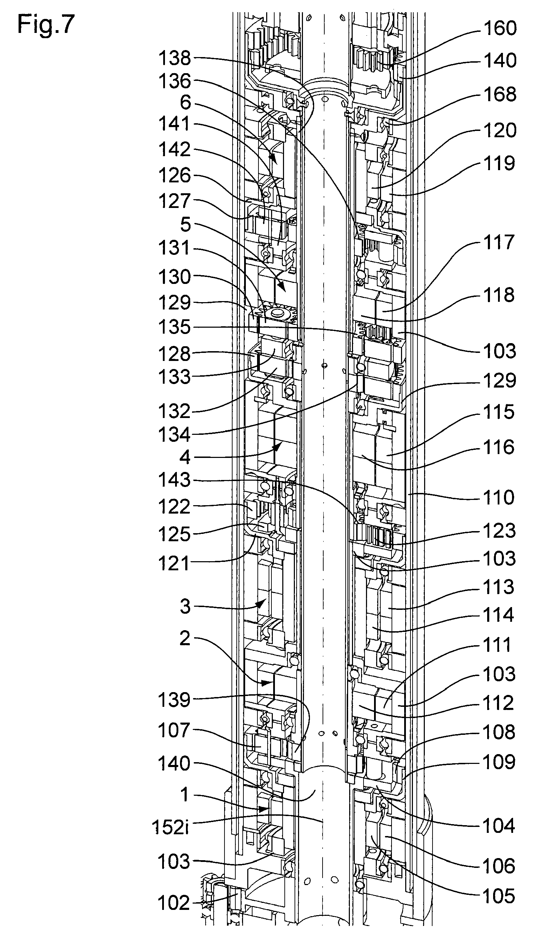

Quant au troisième dispositif magnétique 3, la seule différence avec les premier et sixième dispositifs magnétiques 1 et 6, réside dans le coefficient $G_3$ de la fonction sinusoïdale régulière $G_3\sin(\alpha)$, décrivant le couple engendré par le troisième dispositif 3 pour une rotation du rotor intérieur 113 d'un angle $\alpha$. En effet, le troisième dispositif magnétique 3 est dimensionné de sorte que $G_3$ est proportionnel à $1/2\, gm_2d_5$. Cette différence est illustrée à la figure 7 dans laquelle on peut constater que le troisième dispositif 3 est deux fois plus large que les premier et sixième dispositifs magnétiques 1 et 6.

La figure 9 illustre en détail le second dispositif magnétique 2 vu en coupe selon un plan perpendiculaire à l'axe de rotation 152i. L'agencement des quatrième et cinquième dispositifs magnétiques 4 et 5 est similaire à celui du deuxième dispositif magnétique 2 et ne sera donc pas décrit en détail ici.

Le rotor intérieur 112 du deuxième dispositif magnétique 2 est constitué d'une enveloppe tubulaire intérieure 112a à laquelle est fixée par tout moyen approprié un premier élément magnétique 158. Le premier élément magnétique 158 est un aimant permanent réalisé dans un matériau approprié et ayant la forme d'une bague entourant l'enveloppe tubulaire intérieure 112a.

De même, le rotor extérieur 111 du deuxième dispositif magnétique 2 est constitué d'une enveloppe tubulaire extérieure 111 a à laquelle est fixée par tout moyen approprié un second élément magnétique 159. Le second élément magnétique 159 est un aimant permanent ayant la forme d'une bague placée à l'intérieur de l'enveloppe tubulaire extérieure 111a.

Les premier et second éléments magnétique 158, 159 sont placés dans leur enveloppe tubulaire respective de sorte que le champ magnétique généré par lesdites plaquettes s'étend radialement par rapport audites enveloppes tubulaires.,

De part l'agencement des éléments 158, 159 du rotor intérieur 112 et du rotor extérieur 111, le deuxième dispositif magnétique 2 retrouve une position stable de repos à chaque rotation relative de 360° du rotor intérieur 112 par rapport au rotor extérieur 111 et à une rotation relative de 180°, la position d'équilibre est instable. De plus, le couple maximal engendré par les rotors intérieur et extérieur 112, 111 cherchant à retrouver une position de repos est généré après une rotation relative de 90° du rotor intérieur 112 et du rotor extérieur 111. La même constatation s'applique pour les quatrième et cinquième dispositifs magnétiques 4, 5 dont l'agencement est similaire.

Le rotor intérieur 112 et le rotor extérieur 111 et en particulier les premier et second éléments magnétiques 158, 159 sont dimensionnés pour que

- Le couple généré par le retour du rotor intérieur 112 et du rotor extérieur 111 dans une position de repos suive une fonction sinusoïdale régulière. La régularité de la fonction est obtenue en modifiant le diamètre extérieur et/ou intérieur des éléments magnétiques en forme de bague. Ladite régularité de la fonction dépend également du matériau dans lequel sont réalisés les rotors (matériau magnétique doux par exemple).
- Pour une rotation relative d'angle $\alpha$ du rotor intérieur 112 par rapport au rotor extérieur 111, la fonction sinusoïdale régulière est de la forme $G_2 \sin(\alpha)$ avec dans cette forme d'exécution $G_2$ proportionnel à 1/4 $gm_2d_5$. En particulier, dans cette forme d'exécution la fonction sinusoïdale régulière a une période simple, c'est-à-dire qu'un tour complet du rotor intérieur 112 par rapport au rotor extérieur 111 correspond à une période complète de la fonction sinusoïdale.

Cela s'applique également au cinquième dispositif magnétique 5 qui est agencé pour générer un couple dont la fonction sinusoïdale régulière est

$$G_5 \sin(\alpha)$$

Avec dans cette forme d'exécution $G_5$ proportionnel à 1/4 $gm_2d_5$.

Quant au quatrième dispositif magnétique 4, la seule différence avec les deuxième et cinquième dispositifs magnétiques 2 et 5, réside dans le coefficient $G_4$ de la fonction sinusoïdale régulière $G_4 \sin(\alpha)$, décrivant le couple engendré par le quatrième dispositif 4 pour une rotation relative du rotor intérieur 116 par rapport au rotor extérieur 117 d'un angle $\alpha$. En effet, dans cette forme d'exécution, le quatrième dispositif magnétique 4 est dimensionné de sorte que $G_4$ est proportionnel à 1/2 $gm_2d_5$. Cette différence est illustrée à la figure 7 dans laquelle on peut constater que le quatrième dispositif magnétique 4, tout comme le troisième dispositif magnétique 3, est deux fois plus large que les premier, deuxième, cinquième et sixième dispositifs magnétiques 1, 2, 5 et 6.

Les enveloppes tubulaires intérieures et extérieures sont réalisées de préférence en un alliage ferromagnétique doux afin de boucler les champs magnétiques engendrés par les plaquettes (154, 155, 156, 157, 158, 159) qu'ils portent et d'isoler les dispositifs magnétiques 1 à 6 du reste du dispositif de compensation 150 et du reste du bras mécanique articulé 300.

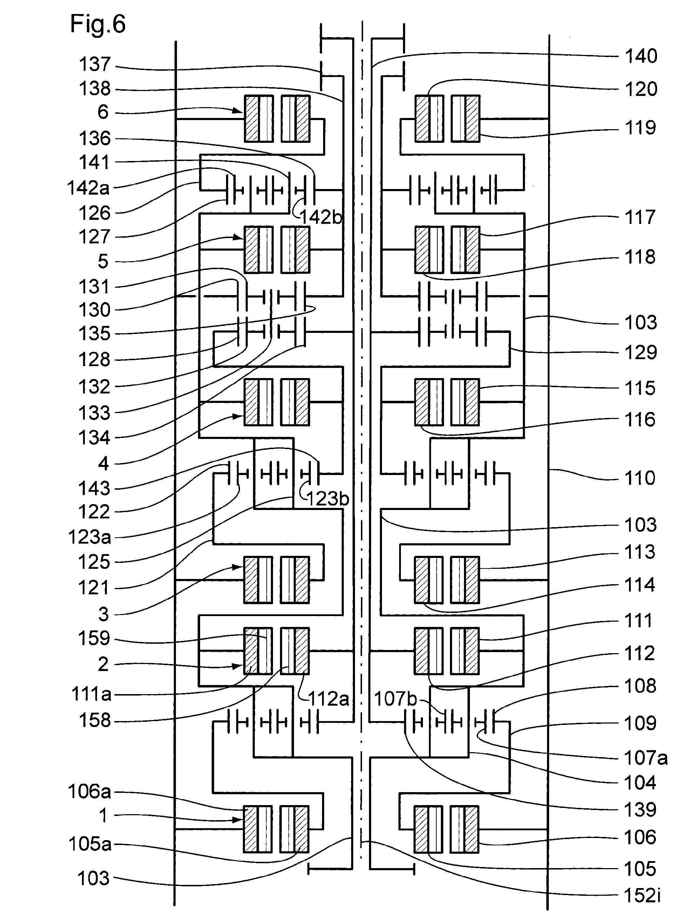

Les engrenages reliant dans cette forme d'exécution les premier, deuxième et troisième arbres de transmission 103, 140, 138 aux dispositifs magnétiques 1 à 6 ainsi que les engrenages permettant de transmettre les couples engendrés par lesdits dispositifs magnétiques aux deuxième, troisième et quatrième axes 151, 152, 153 sont décrit en détail ci-après en référence aux figures 6, 7, 10 et 11.

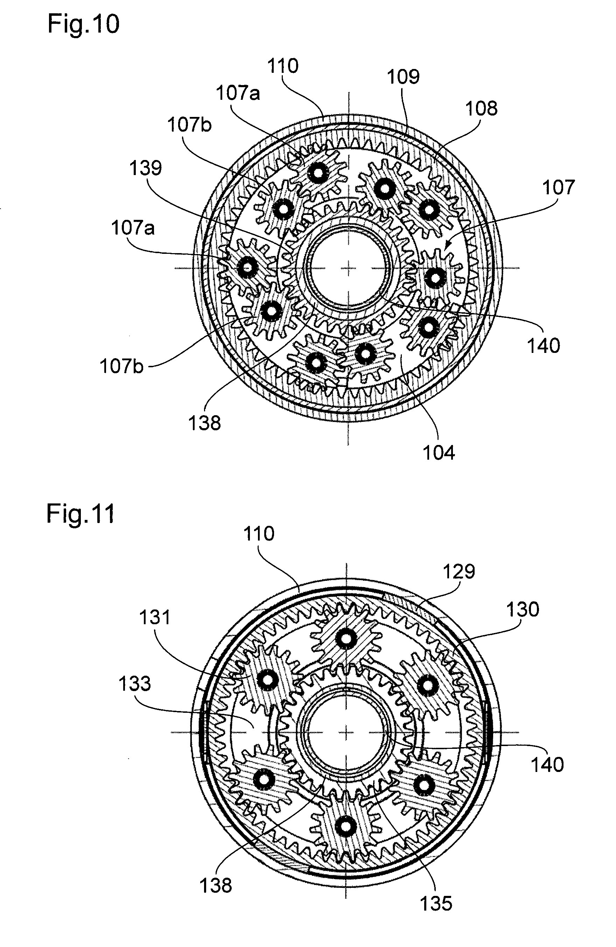

Dans la forme d'exécution illustrée notamment aux figures 6 et 10, un premier porte-planète 104 est monté solidaire du premier arbre de transmission 103. Un premier mobile de satellite 107 est monté pivotant sur ledit premier porte-planète 104 parallèlement au premier arbre de transmission 103 et à l'axe de rotation principal 152i. Le premier mobile de satellite 107 est composé d'au moins une paire de roues de satellite 107a,107b engrenant l'une avec l'autres. De préférence, le premier mobile de satellite 107 est composé de cinq paires de roues de satellites 107a, 107b.

Un deuxième porte-planète 125 est monté solidaire du premier arbre de transmission 103. Un deuxième mobile de satellite 123 est monté pivotant sur ledit deuxième porte-planète 125 parallèlement au premier arbre de transmission 103 et à l'axe de rotation principal 152i. Le deuxième mobile de satellite 123 est composé d'au moins une paire de roues de satellites 123a, 123b engrenant l'une avec l'autre. De préférence, dans la forme d'exécution illustrée, le deuxième mobile de satellite 123 est composé de cinq paires de roues de satellites 123a, 123b.

Un troisième porte-planète 141 est monté solidaire du premier arbre de transmission 103. Un troisième mobile de satellite 142 est monté pivotant sur ledit troisième porte-planète 141 parallèlement au premier arbre de transmission 103 et à l'axe de rotation principal 152i. Le troisième mobile de satellite 142 est composé d'au moins une paire de roues de satellites 142a,142b engrenant l'une avec l'autre. De préférence, dans la forme d'exécution illustrée, le troisième mobile de satellite 142 est composé de cinq paires de roues de satellites 142a, 142b.

Le premier arbre de transmission 103 est également solidaire des rotors extérieurs 111, 115, 117 des deuxième, quatrième et cinquième dispositifs magnétique 2, 4, 5.

Le deuxième arbre de transmission 140 porte une première roue solaire 139 et une seconde roue solaire 134. Le deuxième arbre de transmission 140 est en outre solidaire du rotor intérieur 112 du deuxième dispositif magnétique 2. La première roue solaire 139 est en prise avec le mobile de satellite 107 porté par le premier arbre de transmission 103. Ledit premier mobile de satellite 107 est encore en prise avec la denture intérieure d'une première couronne dentée 108 reliée solidairement par un premier élément de liaison 109 au rotor intérieur 105 du premier dispositif magnétique 1. Le premier porte planète 104, le premier mobile de satellite 107, la première roue solaire 139 et la première couronne dentée 108 forment un premier engrenage planétaire inverse (figure 10) : en effet, le premier mobile de satellite 107 est agencé pour que, si l'on suppose la couronne 108 fixée, les sens de rotation de la première roue solaire 139 et du premier porte planète 104 soient opposés. Le premier engrenage planétaire inverse 104, 107, 108, 139 permet d'additionner les mouvements des entrées soit de la première roue solaire 139 et du première porte planète 104 (solidaire du premier arbre de transmission 103) en tenant compte d'un certain rapport d'engrenage. Dans la forme d'exécution illustrée, la sortie sur la première couronne dentée 108 est dans un rapport d'un demi de l'addition des entrées.

La seconde roue solaire 134 du deuxième arbre de transmission 140 engrène avec un quatrième mobile de satellite 132 porté par un quatrième porte-planète 133 supporté par des guidages rotatifs (non illustrés) sur le deuxième arbre de transmission 140. Le quatrième mobile de satellite 132 est encore en prise avec la denture intérieure d'une seconde couronne dentée 128 reliée solidairement par un deuxième élément de liaison approprié 129 au rotor intérieur 116 du quatrième dispositif magnétique 4. Dans cette forme d'exécution et comme illustré à la figure 11, le quatrième mobile de satellite est formé d'au moins une roue de satellite et de préférence six roues de satellites 131 portées chacune par le quatrième porte planète 133.

Le quatrième porte planète 133, le quatrième mobile de satellite 132, la seconde roue solaire 134 et la deuxième couronne dentée 128 forment un premier engrenage planétaire simple : en effet, lesdits éléments et en particulier le quatrième mobile de satellite 132 sont conformés pour que, si l'on suppose la deuxième couronne dentée 128 fixée, le sens de rotation de la seconde roue solaire 134 et du quatrième porte planète 133 soit le même.

Le troisième arbre de transmission 138 porte une troisième et une quatrième roue solaire 135, 136. Le troisième arbre de transmission 138 est également solidaire du rotor intérieur 118 du cinquième dispositif magnétique 5.

La troisième roue solaire 135 est en prise avec un cinquième mobile de satellite 131 porté par le quatrième porte planète 133. Ledit cinquième mobile de satellite 131 engrène encore avec la denture intérieure d'une troisième couronne dentée 130 fixe par rapport au support 110 et montée dans celui-ci par tout moyen approprié.

Le quatrième porte planète 133, le cinquième mobile de satellite 131, la troisième roue solaire 135 et la troisième couronne dentée 130 forment un deuxième engrenage planétaire simple (sans inversion du sens de rotation entre la troisième roue solaire 135 et le quatrième porte planète 133) illustré à la figure 11.

Les premier et deuxième engrenages planétaires simples (133, 132, 134, 128 ; 133, 131, 135, 130) permettent de différentier les mouvements des deuxième et troisième arbres de transmission 140, 138 afin d'en extraire le mouvement propre (en tenant compte d'un certain rapport d'engrenage) du quatrième axe 153 (c'est-à-dire l'angle $\theta_4$) de la quatrième liaison pivot 306 en sortie sur la deuxième couronne dentée 128.

Dans cette forme d'exécution, le rapport d'engrenage entre les deuxième et troisième couronnes dentées 128, 130 et les deuxième et troisième roues solaires 134, 135 est de deux.

La quatrième roue solaire 136 est en prise avec le troisième mobile de satellite 142 porté par le troisième porte planète 141 solidaire du premier arbre de transmission 103. Ledit troisième mobile de satellite 142 est encore en prise avec la denture intérieure d'une quatrième couronne dentée 127 reliée solidairement par un troisième élément de liaison approprié 126 au rotor intérieur 120 du sixième dispositif magnétique 6.

Le troisième porte planète 141, le troisième mobile de satellite 142, la quatrième roue solaire 136 et la quatrième couronne dentée 127 forment un second engrenage planétaire inverse, c'est-à-dire que le troisième mobile de satellite 142 est agencé de sorte que, si l'on suppose la quatrième couronne dentée 127 fixée, le sens de rotation de la quatrième roue solaire 136 est identique au sens de rotation du troisième porte planète 141.

Tout comme le premier engrenage planétaire inverse (104, 107, 108, 139) le second engrenage planétaire inverse (141, 142, 127, 136) permet d'additionner les mouvements des entrées soit de la quatrième roue solaire 136 et du troisième porte planète 141 (solidaire du premier arbre de transmission 103) en tenant compte d'un certain rapport d'engrenage. Dans la forme d'exécution illustrée, la sortie sur la quatrième couronne dentée 127 est dans un rapport d'un demi de l'addition des entrées.

Enfin, un troisième engrenage planétaire inverse (avec inversion de sens entre la cinquième roue solaire 143 et le deuxième porte planète 125) est formé du deuxième porte planète 125 solidaire du premier arbre de transmission 103, du deuxième mobile de satellite 123 qui est en prise avec une cinquième roue solaire 143 et avec une cinquième couronne dentée 122. La cinquième roue solaire 143 est reliée solidairement par le deuxième élément de liaison 129 au rotor intérieur 116 du quatrième dispositif magnétique 4 et à la deuxième couronne dentée 128. La cinquième couronne dentée 122 est reliée quand à elle solidairement par un quatrième élément de liaison approprié 121 au rotor intérieur 114 du troisième dispositif magnétique 3.

Avec les considérations ci-dessus au sujet de l'agencement des six dispositifs magnétiques 1 à 6 et du système d'engrenage formant le dispositif de compensation 150, on peut calculer les couples générés par chacun desdits dispositifs magnétiques dans la forme d'exécution illustrée.

Ainsi, le premier engrenage planétaire inverse 104, 107, 139, 108 permet de transmettre au rotor intérieur 105 du premier dispositif magnétique 1 l'addition des rotations des premier et deuxième arbres 103, 140. Puisque le premier arbre de transmission 103 est agencé pour transmettre au dispositif de compensation 150 la rotation du bras supérieur 304 autour du deuxième axe 151 ($\theta_2$) et que le deuxième arbre de transmission 140 est agencé pour transmettre au dispositif de compensation 150 la soustraction des mouvements de l'avant bras 307 autour des troisième et quatrième axes 152, 153 ($\theta_3$-$\theta_4$), toute rotation desdits premier et deuxième arbres de transmission 103, 140 entraîne une rotation du rotor intérieur 105 par rapport au stator extérieur 106 du premier dispositif magnétique 1 d'un angle égal à $t_1(\theta_2 + (\theta_3-\theta_4))$, où $t_1$ est un paramètre qui tient compte des rapports d'engrenage et qui vaut ½ dans cette forme d'exécution. Suite à cette rotation du rotor intérieur 105, le premier dispositif magnétique 1 va chercher à reprendre sa position de repos (illustrée à la figure 8) et va générer un couple dont la valeur est

$$G_1 \sin (\theta_2 + (\theta_3 - \theta_4)) \approx 1/4 g m_2 d_5 \sin (\theta_2 + (\theta_3 - \theta_4)).$$

En effet, dans cette forme d'exécution, le premier dispositif magnétique 1 est agencé pour que le couple qu'il génère suive une fonction sinusoïdale régulière de période double pour tenir compte des rapports d'engrenage du premier engrenage planétaire inverse 104, 107, 108, 139.

Le rotor intérieur 112 du deuxième dispositif magnétique 2 est solidaire du deuxième arbre de transmission 140, il effectue donc une rotation égale à $\theta_3$-$\theta_4$. Le rotor extérieur 111 du deuxième dispositif magnétique 2 est solidaire du premier arbre de transmission 103, il effectue donc une rotation égale à $\theta_2$. Ainsi, la rotation relative des rotors intérieur et extérieur 112, 111 du deuxième dispositif magnétique 2 est égale à la soustraction $\theta_2 - (\theta_3 - \theta_4)$. Suite à cette rotation relative, les rotors intérieur et extérieur 112, 111 vont cherche à reprendre leur position de repos (illustrée à la figure 9) et vont donc générer un couple égal à

$$G_2 \sin (\theta_2 - \theta_3 + \theta_4) \approx 1/4 g m_2 d_5 \sin (\theta_2 - \theta_3 + \theta_4).$$

Le premier engrenage planétaire simple 133, 134, 132, 128 permet d'isoler la rotation autour du quatrième axe 153 ($\theta_4$) transmise par le deuxième arbre de transmission 140. Le troisième engrenage planétaire inverse (125, 123, 143, 122) permet d'additionner à cette rotation autour du quatrième axe 153 la rotation autour du deuxième axe 152 ($\theta_2$) transmise par le premier arbre de transmission 103. Ainsi, le rotor intérieur 114 du troisième dispositif magnétique 3 effectue une rotation d'un angle égal à $t_3 (\theta_2 + \theta_4)$, où $t_3$ est un paramètre qui tient compte des rapports d'engrenage et qui vaut ½ dans cette forme d'exécution. Suite à cette rotation, le rotor intérieur 114 va chercher à retrouver sa position de repos par rapport à son stator extérieur 113 et ce faisant va générer un couple égal à

$$G_3 \sin (\theta_2 + \theta_4) \approx 1/2 g m_2 d_5 \sin (\theta_2 + \theta_4).$$

La même remarque que pour le premier dispositif magnétique 1 s'applique en ce qui concerne la relation entre la période de la fonction sinusoïdale caractérisant le couple généré par le troisième dispositif magnétique 3 et le coefficient de l'angle de rotation du rotor intérieur 114 déterminé par les rapports d'engrenage du premier engrenage planétaire simple et du troisième engrenage planétaire inverse.

Quant au quatrième dispositif magnétique 4, la rotation du rotor intérieur 116 solidaire du la couronne dentée 128 (sortie du premier engrenage planétaire simple 133, 132, 134, 128) est donc égale à $\theta_4$ tandis que la rotation du rotor extérieur 115 solidaire du premier arbre de transmission 103 est donc égale à $\theta_2$. Le couple engendré par ledit quatrième dispositif magnétique 4 est donc égal à

$$G_4 \sin (\theta_2 - \theta_4) \approx 1/2 g m_2 d_5 \sin (\theta_2 - \theta_4).$$

Suivant un raisonnement similaire, la rotation du rotor intérieur 118 du cinquième dispositif magnétique 5 solidaire du troisième arbre de transmission 138 est donc égale à $\theta_3 + \theta_4$, tandis que la rotation du rotor extérieur 117 dudit cinquième dispositif magnétique 5 solidaire du premier arbre de transmission 103 est donc égale à $\theta_2$. Ainsi, le couple engendré par ledit cinquième dispositif magnétique 5 est donc égal à

$$G_5 \sin (\theta_2 - \theta_3 - \theta_4) \approx 1/4 g m_2 d_5 \sin (\theta_2 - \theta_3 - \theta_4).$$

Enfin, la rotation du rotor intérieur 120 du sixième dispositif magnétique est déterminée par le deuxième engrenage planétaire inverse (141, 142, 136, 127) et correspond à $t_6 (\theta_2 + \theta_3 + \theta_4)$ où $t_6$ est un paramètre qui tient compte des rapports d'engrenage et qui vaut ½ dans cette forme d'exécution. Le couple engendré par ledit dispositif magnétique est donc égal à

$$G_6 \sin (\theta_2 + \theta_3 + \theta_4) \approx g m_2 d_5 \sin (\theta_2 + \theta_3 + \theta_4).$$

La même remarque que pour les premier et troisième dispositifs magnétiques 1, 3 s'applique en ce qui concerne la relation entre la période de la fonction sinusoïdale caractérisant le couple généré par le sixième dispositif magnétique 6 et le coefficient de l'angle de rotation du rotor intérieur 120 déterminé par les rapports d'engrenage du deuxième engrenage planétaire inverse.

Ainsi, tout mouvement du bras supérieur 304 et/ou de l'avant-bras 307 par rapport aux deuxième, troisième et quatrième axes 151, 152, 153 des deuxième, troisième et quatrième liaisons pivot 303, 305, 306 entraîne les six dispositifs magnétiques qui sont agencés pour générer un couple dépendant dudit mouvement (c'est-à-dire des angles $\theta_2$, $\theta_3$, $\theta_4$) et des caractéristiques physiques du bras mécanique articulé (masselotte $m_2$ et distance $d_5$).

Chaque dispositif magnétique 1 à 6 est donc agencé pour générer un terme en sinus composant les équations des contre couple $C_{303}$, $C_{305}$, $C_{306}$ déterminées ci-dessus.

Le système d'engrenage du dispositif de compensation selon la présente forme d'exécution et en particulier, les premier, deuxième et troisième engrenages planétaires inverses et les premier et deuxième engrenages planétaires simples sont agencés pour combiner les couples générer par les dispositifs magnétiques 1 à 6 de manière à obtenir les contre couples $C_{303}$, $C_{305}$ et $C_{306}$ calculés ci-dessus et transmettre ces contre-couples aux deuxième, troisième, quatrième axes 151, 152, 153 des deuxième, troisième et quatrième liaisons pivot 303, 305, 306, via les premier, deuxième et troisième arbres de transmission 103, 140, 138 respectivement.

Ainsi, quels que soit la position du bras supérieur 304 et de l'avant bras 307 par rapport aux deuxième, troisième et quatrième liaisons pivot 303, 305, 306, les effets de la gravité sur lesdites liaisons pivot sont compensés et l'équilibre du bras mécanique articulé 300 est maintenu.

Le bras mécanique articulé 300 et le dispositif de compensation 150 selon la forme d'exécution illustrée a été décrit ci-dessus à titre d'exemple uniquement et il apparaîtra clairement que des modifications et des ajustements sont possible sans sortir du cadre de la présente invention.

Il est évident notamment que le premier axe 320 et le premier axe de rotation 320i de la première liaison pivot 302 pourrait ne pas être verticaux. Dans ce cas, les effets de la gravité s'exerceraient également sur cette liaison pivot, effets qui pourraient être compensés par le dispositif de compensation selon l'invention moyennant quelques modifications évidentes ou un autre dispositif connu.

Il est également évident que cette première liaison pivot 302 pourrait être supprimée.

De même, en variante, le moment de force dû à la gravité s'exerçant sur le deuxième axe 151 de la deuxième liaison pivot 303 pourrait être entièrement compensé à l'aide d'un dispositif de compensation passif tel que décrit ci-dessus. Pour ce faire, il suffit d'ajouter un septième dispositif magnétique agencé pour générer un couple dont la fonctions est une sinusoïdale régulière de la forme $G_7 \sin (\alpha)$ avec $G_7$ proportionnel à $(m_1 d_3 + m_2 d_2)$ et de modifier le système de transmission pour transmettre audit dispositif magnétique toute rotation du bras mécanique articulé autour de la deuxième liaison pivot 303 (i.e., la valeur de $\theta_2$). Ces modifications sont la portée de l'homme du métier.

De manière générale, un bras mécanique articulé selon l'invention présente au moins une articulation à compenser articulant un premier élément dudit bras (socle, bras supérieur, avant-bras) à un deuxième élément dudit bras (bras supérieur, avant-bras, « main » ou porte outil) et correspondant à un degré de liberté dudit bras. Le bras articulé comprend un dispositif de compensation de la gravité selon l'invention destiné à compenser les effets de la gravité sur ladite articulation à compenser. Le dispositif de compensation comprend un mécanisme de transmission et un mécanisme de génération de couple. Le mécanisme de génération de couple comprend au moins un dispositif magnétique qui est du type rotor/stator présentant un élément intérieur magnétique pivotant dans un élément extérieur magnétique et agencés pour que la rotation d'un élément par rapport à l'autre entraîne la production d'un couple dû au dispositif magnétique reprenant sa position de repos. Comme démontré ci-dessus dans un cas particulier, le nombre minimal de dispositifs magnétiques est déterminé comme suit :

- Le moment de force exercé par la gravité sur l'articulation est calculé. Ce moment dépend des propriétés du bras mécanique articulé : masse, nombre d'articulations, position du bras mécanique articulé par rapport aux autres articulations (par exemple, dans la forme d'exécution illustrée, la position du bras mécanique et en particulier du porte outil 310 par rapport aux cinquième et sixième liaisons pivot 308, 309 n'a pas d'influence sur le moment de force dû à la gravité exercé sur les deuxième, troisième et quatrième liaisons pivot 303, 305, 306).

- A l'aide des formules trigonométriques usuelles, le moment de force calculé ci-dessus est transformé de manière à n'avoir que des termes composés de la fonction sinus de la forme c sin($\alpha$) où c est une constante dépendant en particulier de la masse et de la constante gravitationnelle terrestre g et où $\alpha$ est un angle qui dépend de la position du bras mécanique articulé et de ses membres par rapport aux articulations dudit bras.

- Le nombre de ces termes en sinus est le nombre minimal de dispositifs magnétiques que devra comprendre le mécanisme de génération de couple du dispositif de compensation.

Il est évident que l'on obtient ainsi un nombre minimal, et que davantage de dispositifs magnétiques pourraient être utilisés. Les modifications qui en découlent apparaîtront clairement à un homme du métier.

Chacun des dispositifs magnétiques est alors agencé pour que le couple qu'il produit suive une fonction sinusoïdale régulière de la forme C sin (p $\beta$) où C est une constante, p est une période entière et $\beta$ un angle. Comme expliqué ci-dessus, la taille et l'agencement des dispositifs magnétiques dépendent de la taille et de la masse du bras et également du mécanisme d'engrenage.

Le mécanisme de transmission du dispositif de compensation est quant à lui agencé pour transmettre au(x) dispositif(s) magnétique(s) les rotations du bras mécanique articulé autour de l'articulation à compenser et de ses autres articulations qui auraient une influence sur ladite articulation à compenser. Ces rotations vont entrainer les dispositifs magnétiques qui vont alors produire un couple déterminé. Le mécanisme de transmission est également agencé pour combiner et renvoyer ces couples déterminés à l'articulation à compenser de sorte que le couple total ainsi transmis annule le moment de force dû à la gravité s'exerçant sur ladite articulation à compenser.

La présente invention se généralise donc à un bras articulé présentant une seule ou deux ou trois ou plus articulations à compenser, à un bras articulé comme celui décrit ci-dessus pour lequel certaines articulations n'ont pas d'influence sur les autres articulations, la position du bras par rapport à ces articulations n'entraînant pas de modification de son centre de gravité par exemple.

Le mécanisme de transmission peut être un mécanisme à roue dentées comme décrit ci-dessus en référence à la forme d'exécution privilégiée ou tout autre mécanisme approprié.

Vu la nature du dispositif de compensation, lors du montage du bras mécanique articulé selon l'invention, il est nécessaire de tenir compte de la position dudit bras et de ses membres par rapport à ses articulations : par exemple, pour reprendre la forme d'exécution décrite ci-dessus, la position de montage du bras mécanique articulé 300 correspond à des valeurs précises de $\theta_2$, $\theta_3$, $\theta_4$. Par conséquent, il faut « charger » les six dispositifs magnétiques 1 à 6 en les plaçant dans une position qui correspond auxdites valeurs précises $\theta_2$, $\theta_3$, $\theta_4$ et ensuite assembler le bras et le dispositif de compensation. Par exemple, pour le premier dispositif magnétique 1, il faut faire tourner le rotor intérieur 105 par rapport au stator extérieur 106 d'un angle correspondant à ($\theta_2$ + $\theta_3$ - $\theta_4$)/2, ½ étant le rapport d'engrenage.

Tout type de dispositif magnétique peut être utilisé : ainsi, des aimants présentant une structure de Halbach pourront s'avérer appropriés selon la taille du système.

Un bras mécanique articulé selon l'invention comprenant un dispositif passif de compensation tel que décrit ci-dessus présente de nombreux avantages. Etant passif, il ne nécessite pas de source d'énergie pour fonctionner. Il est peu encombrant, fiable et précis. De plus, il s'adapte à tout type et à toute taille de bras mécanique articulé puisqu'il suffit d'ajuster les dispositifs magnétiques et le mécanisme d'engrenage en conséquence selon la taille, la masse, ou le nombre de liaisons pivot (degré de liberté dudit bras) à compenser.

**Revendications**

1. Bras mécanique articulé (300) comprenant un dispositif passif de compensation de la gravité (150) agencé pour compenser les effets de la gravité sur au moins une première liaison pivot (305) articulant un premier membre (304) dudit bras à un second membre (307) dudit bras et constituant un premier degré de liberté dudit bras, ledit dispositif passif de compensation de la gravité (150) comprenant un mécanisme de transmission et au moins un dispositif magnétique (1-6), le mécanisme de transmission étant agencé pour transmettre au dispositif magnétique (1-6) toute rotation du second membre (307) par rapport à ladite première liaison pivot, le dispositif magnétique (1-6) étant agencé pour produire un couple suite à ladite rotation du second membre (307), le mécanisme de transmission et le dispositif magnétique (1-6) étant encore agencés pour que ledit couple soit retransmis par le mécanisme de transmission à la première liaison pivot (305), de sorte que ledit couple retransmis annule le moment de force dû à la gravité s'exerçant sur le bras mécanique articulé par rapport à ladite première liaison pivot (305), **caractérisé par le fait que** ledit au moins un dispositif magnétique (1-6) comprend au moins un premier rotor pivotant (105,111) par rapport à un stator (106) ou à un second rotor (112).

2. Bras mécanique articulé selon la revendication 1, **caractérisé par le fait que** ledit au moins un dispositif magnétique (1-6) est agencé pour que suite à la rotation du premier rotor par rapport au stator ou au second rotor, le retour dudit premier rotor dans sa position de repos par rapport au stator ou au second rotor engendre un couple dont la fonction est une sinusoïde régulière.

3. Bras mécanique selon l'une des revendications précédentes, **caractérisé par le fait que** les premier rotor, second rotor ou stator comprennent une enveloppe tubulaire sur la quelle est fixé au moins un élément magnétique.

4. Bras mécanique articulé selon la revendication 1, **caractérisé par le fait que** le dispositif de compensation (150) est agencé pour compenser les effets de la gravité sur une deuxième liaison r pivot (306) articulant le premier membre (304) au deuxième membre (307) et formant un deuxième degré de liberté dudit bras et sur une troisième liaison pivot (303) articulant un troisième membre (301) du bras au premier membre (304) et constituant un troisième degré de liberté dudit bras, le dispositif de compensation comprenant un nombre minimal de dispositifs magnétiques, ledit nombre minimal correspondant au nombre de termes en sinus distincts formant les équations du moment de force exercé par la gravité sur chacune des première, deuxième et troisième liaisons pivot une fois ces équations transformées pour ne contenir que des termes en sinus, le mécanisme de transmission étant agencé pour transmettre à chacun des dispositifs magnétiques toute rotation des premier, second et troisième membres du bras par rapport aux première, deuxième et troisième liaisons pivot, les dispositifs magnétiques étant agencés pour produire suite à ces rotations chacun un couple dont la fonction est une sinusoïde régulière, le mécanisme de transmission et les dispositifs magnétiques étant encore agencés pour transmettre à chacune des première, deuxième et troisième liaison pivot un contre-couple correspondant, combinaison des couples générés par les dispositifs magnétiques, et tel que ledit contre-couple correspondant annule le moment de force dû à la gravité sur la première, deuxième et troisième liaison pivot respectivement.

5. Bras mécanique selon l'une des revendications précédentes, **caractérisé par le fait que** le dispositif passif de compensation de la gravité (150) est logé dans un support (110) faisant partie du premier membre (304) du bras mécanique.

**Patentansprüche**

1. Mechanischer Gelenkarm (300), umfassend eine passive Vorrichtung zur Kompensierung der Schwerkraft (150), welche angeordnet ist, um die Wirkung der Schwerkraft auf mindestens eine Drehverbindung (305) zu kompensieren, welche ein erstes Glied (304) des genannten Arms an ein zweites Glied (307) des genannten Arms anlenkt und einen ersten Freiheitsgrad des genannten Arms darstellt, wobei die genannte passive Vorrichtung zur Kompensierung der Schwerkraft (150) einen Übertragungsmechanismus und mindestens eine magnetische Vorrichtung (1-6) umfasst, wobei der Übertragungsmechanismus angeordnet ist, um an die magnetische Vorrichtung (1-6) jegliche Rotation des zweiten Gliedes (307) in Bezug auf die genannte erste Drehverbindung zu übertragen, wobei die magnetische Vorrichtung (1-6) angeordnet ist, um der genannten Rotation des zweiten Gliedes (307) folgend ein Drehmoment zu erzeugen, wobei der Übertragungsmechanismus und die magnetische Vorrichtung (1-6) ferner angeordnet sind, damit das genannte Drehmoment durch den Übertragungsmechanismus an die erste Drehverbindung (305) zurückübertragen wird, so dass das genannte zurückübertragene Drehmoment das Moment der Kraft aufhebt, welche sich aus der Schwerkraft ergibt, die auf den mechanischen Gelenkarm wirkt, der in Bezug auf die genannte erste Drehverbindung (305) angelenkt ist, **dadurch gekennzeichnet, dass** die genannte mindestens eine magnetische Vorrichtung (1-6) mindestens einen ersten Rotor (105, 111) umfasst, welcher sich in Bezug auf einen Stator (106) oder einen zweiten Rotor (112) dreht.

2. Mechanischer Gelenkarm nach Anspruch 1, **dadurch gekennzeichnet, dass** die genannte mindestens eine magnetische Vorrichtung (1-6) angeordnet ist, damit der Rotation des ersten Rotors in Bezug auf den Stator oder den zweiten Rotor folgend die Rückkehr des genannten ersten Rotors in seine Ruhestellung in Bezug auf den Stator oder den zweiten Rotor ein Drehmoment erzeugt, dessen Funktion eine gleichmäßige Sinuskurve ist.

3. Mechanischer Gelenkarm nach einem der vorangehenden Ansprüche, **dadurch gekennzeichnet, dass** der erste Rotor, der zweite Rotor oder Stator ein rohrförmiges Gehäuse aufweisen, an welchem mindestens ein magnetisches Element befestigt ist.

4. Mechanischer Gelenkarm nach Anspruch 1, **dadurch gekennzeichnet, dass** die Kompensierungsvorrichtung (150) angeordnet ist, um die Wirkung der Schwerkraft auf eine zweite Drehverbindung (306) zu kompensieren, welche das erste Glied (304) an das zweite Glied (307) anlenkt und einen zweiten Freiheitsgrad des genannten Arms darstellt, und auf eine dritte Drehverbindung (303) zu kompensieren, welche ein drittes Glied (301) des Arms an das erste Glied (304) anlenkt und einen dritten Freiheitsgrad des genannten Arms darstellt, wobei die Kompensierungsvorrichtung eine minimale Anzahl magnetischer Vorrichtungen umfasst, wobei die genannte minimale Anzahl der Anzahl verschiedener Sinusterme entspricht, welche die Gleichungen des Moments der durch die Schwerkraft auf jede einzelne der ersten, zweiten und dritten Drehverbindung ausgeübten Kraft bilden, sobald diese Gleichungen umgeformt sind, so dass sie ausschließlich Sinusterme enthalten, wobei der Übertragungsmechanismus angeordnet ist, um an jede der magnetischen Vorrichtungen jegliche Rotation des ersten, zweiten und dritten Gliedes des Arms in Bezug auf die erste, zweite und dritte Drehverbindung zu übertragen, wobei die magnetischen Vorrichtungen angeordnet sind, um diesen Rotationen folgend jeweils ein Drehmoment zu erzeugen, dessen Funktion eine gleichmäßige Sinuskurve ist, wobei der Übertragungsmechanismus und die magnetischen Vorrichtungen ferner angeordnet sind, um an jede der ersten, zweiten und dritten Drehverbindung ein entsprechendes Gegendrehmoment zu übertragen, eine Kombination der von den magnetischen Vorrichtungen erzeugten Drehmomente, und zwar derart, dass das genannte Gegendrehmoment das Moment der Kraft aufhebt, die sich aus der auf die erste, zweite bzw. dritte Drehverbindung einwirkenden Schwerkraft ergibt.

**5.** Mechanischer Gelenkarm nach einem der vorangehenden Ansprüche, **dadurch gekennzeichnet, dass** die passive Vorrichtung zur Kompensierung der Schwerkraft (150) in einer Haltevorrichtung (110) aufgenommen ist, welche Teil des ersten Gliedes (304) des mechanischen Arms ist.

## Claims

**1.** Articulated mechanical arm (300) comprising a passive device for compensation for gravity (150), which is designed to compensate for the effects of gravity on at least a first pivot connection (305) which articulates a first member (304) of the said arm on a second member (307) of the said arm, and constitutes a first degree of freedom of the said arm, the said passive device for compensation for gravity (150) comprising a drive mechanism and at least one magnetic device (1-6), the drive mechanism being designed to transmit to the magnetic device (1-6) any rotation of the second member (307) relative to the said first pivot connection, the magnetic device (1-6) being designed to produce torque further to the said rotation of the second member, the drive mechanism and the magnetic device (1-6) also being designed such that the said torque is retransmitted by the drive mechanism to the first pivot connection (305), such that the said retransmitted torque cancels the moment of force caused by the gravity which is exerted on the articulated mechanical arm, relative to the said first pivot connection (305), **characterised in that** the said at least one magnetic device (1-6) comprises at least a first rotor (105, 111) which pivots relative to a stator (106) or to a second rotor (112).

**2.** Articulated mechanical arm according to claim 1, **characterised in that** the said at least one magnetic device (1-6) is designed so that further to the rotation of the first rotor with respect to the stator or the second rotor, the return of the said first rotor in its rest position with respect to the stator or the second rotor generates a torque the function of which is a regular sinusoid.

**3.** Articulated mechanical arm according to any of the preceding claims, **characterised in that** the first rotor, the second rotor or the stator comprise a tubular envelope on which is fixed at least one magnetic element.

**4.** Articulated mechanical arm according to claim 1, **characterised in that** the device for compensation (150) is designed to compensate for the effects of gravity on a second pivot connection (306) which articulates the first member (304) on the second member (307), and forms a second degree of freedom of the said arm, and on a third pivot connection (303) which articulates a third member (301) of the arm on the first member (304), and constitutes a third degree of freedom of the said arm, the device for compensation comprising a minimum number of magnetic devices, the said minimum number corresponding to the number of distinct sine terms which form the equations of the moment of force exerted by gravity on each of the first, second and third pivot connections once these equations are transformed to contain only sine terms, the drive mechanism being designed to transmit to each of the magnetic devices any rotation of the first, second and third members of the arm relative to the first, second and third pivot connections, the magnetic devices each being designed to produce further to these rotations a torque, the function of which is a regular sinusoid, the drive mechanism and the magnetic devices also being designed to transmit to each of the first, second and third pivot connections a corresponding counter-torque, which is the combination of the torques generated by the magnetic devices, and such that the said corresponding counter-torque cancels the moment of force caused by gravity on the first, second and third pivot connections respectively.

**5.** Articulated mechanical arm according to any of the preceding claims, **characterised in that** the passive device for compensation for gravity (150) is accommodated in a support (110) which forms part of the upper arm 304.

Fig.1

## Fig.2

Fig.3

Fig.4

Fig.5

## Fig.6

Fig.7

## Fig.8

## Fig.9

## Fig.10

## Fig.11

**EP 2 660 016 B1**

## RÉFÉRENCES CITÉES DANS LA DESCRIPTION

**Documents brevets cités dans la description**

- US 6145403 A